# EUROPÄISCHE PATENTSCHRIFT

(11) **EP 4 197 819 B1**
(45) Veröffentlichungstag und Bekanntmachung des Hinweises auf die Patenterteilung: **16.10.2024**
(21) Anmeldenummer: 22203483.7
(22) Anmeldetag: 25.10.2022
(51) Int. Cl.: B60C 11/16, B29D 30/66

(54) **VORRICHTUNG UND VERFAHREN ZUR BESPIKUNG EINES FAHRZEUGREIFENS**
DEVICE AND METHOD FOR APPLYING A SPIKE TO A VEHICLE TYRE
DISPOSITIF ET PROCÉDÉ D'APPLICATION D'UN CLOU SUR UN PNEU DE VÉHICULE

(30) Priorität: 20.12.2021 DE 102021214659
(43) Veröffentlichungstag der Anmeldung: 21.06.2023
(73) Patentinhaber: Continental Reifen Deutschland GmbH, 30175 Hannover (DE)
(72) Erfinder: Kendziorra, Norbert, 30165 Hannover (DE)
(74) Vertreter: Continental Corporation

(56) Entgegenhaltungen:
- EP-A1- 1 055 509
- DE-A1- 102009 026 112
- DE-A1- 102010 015 939

## Beschreibung

Die Erfindung betrifft eine Vorrichtung zum Einbringen eines flüssigen Klebemittels in ein Spike-Loch eines Laufstreifens eines Fahrzeugreifens sowie ein Verfahren zur Befestigung eines Gummispikes in einem Spike-Loch eines Laufstreifens eines Fahrzeugreifens.

Es ist bekannt und üblich, Fahrzeugreifen, insbesondere Fahrzeugluftreifen, mit Spikes auszustatten, um bei winterlichen Fahrbedingungen die Kraftübertragung des Reifens auf schnee- und/oder eisbedeckten Fahrbahnen zu erhöhen. Ein Spike weist dabei üblicherweise einen Spike-Pin aus einem harten Werkstoff wie Metall auf, der aus einem im Laufstreifen in ein Spike-Loch eingefügten Spike-Körper herausragt und somit für den verbesserten Griff auf schneebedeckter Fahrbahn sorgt.

Um eine besonders guten Halt der Spikes im Laufstreifen zu ermöglichen ist es bekannt, dass der Spike-Körper stoffschlüssig mit dem Gummimaterial des Laufstreifens verbunden wird. Insbesondere bei metallischen Spike-Körpern wird dabei üblicherweise ein Haftsystem vor Einsetzen des Spikes in das Spike-Loch auf die Oberfläche des Spike-Körpers aufgesprüht, welches nach Einsetzen des Spikes in den Laufstreifen mittels Wärmeeintrag aktiviert wird.

Aus der EP 3380342 A1 ist ein Reifen mit einem Laufstreifen aufweisend einen Spike bekannt, wobei die Oberfläche des Spike-Körpers des Spikes ganz oder teilweise aus einem elastomeren Material besteht. Die stoffschlüssige dauerhafte Anbindung des elastomeren Materials des Spikes zum Gummimaterial des Laufstreifens ist nicht trivial. Durch die hohe Belastung der Klebestellen im Betrieb des bespikten Reifens kann es im Nutzungszeitraum des bespikten Reifens zum Bruch der Klebestellen, insbesondere bei Lufteinschlüssen zwischen Spike und Laufstreifen, kommen.

Das Patentschrifft DE 10 2010 015939 A1, offenbart das Pumpen einer nicht aktivierten Klebstoffkomponente in das Spikeloch offenbart, die durch eine Schicht auf dem Spike aktiviert wird, wenn sie in das Loch gedrückt wird.

Aufgabe ist es daher, eine Vorrichtung und ein Verfahren zur Verfügung zu stellen, die auf einfache Art und Weise eine verbesserte Anbindung zwischen einem Gummispike und dem Laufstreifen ermöglichen.

Dies wird in Bezug auf die Vorrichtung durch eine Vorrichtung zum Einbringen eines flüssigen Klebemittels in ein Spike-Loch eines Laufstreifens eines Fahrzeugreifens gelöst. Die Vorrichtung weist zumindest einen Vorlagenbehälter zur Aufnahme des flüssigen Klebemittels, eine Pumpe zum Pumpen des flüssigen Klebemittels von dem Vorlagenbehälter in eine Injektionsleitung der Vorrichtung und eine Positioniervorrichtung zur Positionierung eines Auslasses der Injektionsleitung relativ zu dem Spike-Loch des Laufstreifens auf. Die Positioniervorrichtung ist zumindest geeignet zum Positionieren des Auslasses der Injektionsleitung über dem Spike-Loch, zum Absenken des über dem Spike-Loch positionierten Auslasses in das Spike-Loch, zum Anheben des Auslasses aus dem Spike-Loch heraus und Positionieren des Auslasses über dem Spike-Loch und zum Entfernen des über dem Spike-Loch positionierten Auslasses vom Spike-Loch.

Die Vorrichtung ermöglicht somit auf einfache Art und Weise die Verwendung eines, insbesondere zur Verklebung von Gummi auf Gummi geeigneten, flüssigen Klebemittels zur verbesserten Anbindung zwischen einem Spike, insbesondere einem Gummispike, und dem das Spike-Loch begrenzenden Gummimaterial des Laufstreifens. Erfindungswesentlich ist, dass die Vorrichtung die Einbringung einer definierten Menge des flüssigem Klebemittels in das Spike-Loch vor Einsetzen des Spikes, insbesondere des Gummispikes, ermöglicht. Ein aufwändiges Aufbringen einer die Haftung beförderlichen Schicht auf den Spike vor Einsetzen des Spikes in das Spike-Loch ist somit nicht nötig. Die Verwendung des flüssigen Klebemittels hilft zudem bei der Vermeidung von Lufteinschlüssen zwischen Spike und Laufstreifen, wodurch die dauerhafte Anbindung verbessert ist. Die Verwendung eines in das Spike-Loch eingebrachten flüssigen Klebemittels erweitert zudem die anwendbaren Klebemittel.

Somit ist eine Vorrichtung zur Verfügung gestellt, die auf einfache Art und Weise eine verbesserte Anbindung zwischen einem Spike, insbesondere einem Gummispike, und dem Laufstreifen ermöglicht.

Die Positioniervorrichtung kann zur jeweiligen Positionierung des Auslasses der Injektionsleitung relativ zum Spike-Loch die absolute Position des Auslasses und/oder die absolute Position des Spike-Lochs verändern. Die Positioniervorrichtung kann hierfür wirkweise mit der Vorrichtung und/oder dem Reifen verbunden sein.

Die Vorrichtung ermöglicht insbesondere auf einfache Art und Weise die Verwendung eines zur Verklebung von Gummi auf Gummi geeigneten flüssigen Klebemittels zur verbesserten Anbindung zwischen einem Gummispike und einem das Spike-Loch begrenzenden Gummimaterial des Laufstreifens.

Das zur Verklebung von Gummi auf Gummi geeignete flüssige Klebemittel kann unvernetztes, insbesondere unvulkanisiertes, elastomeres Material aufweisen. Dabei kann das zur Verklebung von Gummi auf Gummi geeignete flüssige Klebemittel ein Lösungsmittel, insbesondere ein Öl, und ein in dem Lösungsmittel gelöstes unvulkanisiertes elastomeres Material aufweisen oder daraus gebildet sein. Das Lösungsmittel kann ein Benzin und/oder ein Öl aufweisen. Das Lösungsmittel kann aus einem Benzin und/oder einem Öl bestehen.

Der Gummispike weist einen Spike-Körper auf, dessen äußere Oberfläche ganz oder teilweise aus Gummi ausgebildet ist.

Der Spike-Körper kann zumindest einen Fußflansch und einen Oberflansch aufweisen oder daraus bestehen, wobei der Oberflansch zumindest teilweise einen Spikepin ummantelt, welcher sich von einem im Fußflansch verankerten Ende bis zu einem Spikepinende des Spikepins erstreckt. Der Oberflansch kann ganz oder teilweise aus Gummi gebildet sein. Alternativ oder zusätzlich kann der Fußflansch ganz oder teilweise aus Gummi ausgebildet sein.

Eine vorteilhafte Ausführungsform ist dadurch gegeben, dass die Vorrichtung eine Steuervorrichtung zur Steuerung der Pumpe und/oder eine Steuervorrichtung zur Steuerung der Positioniervorrichtung aufweist.

Dies ermöglicht eine effiziente Steuerung der Vorrichtung. Die Steuervorrichtung kann hierfür wirkweise mit der Pumpe und/oder der Positioniervorrichtung verbunden sein. Die Pumpe und die Positioniervorrichtung können von derselben Steuervorrichtung oder von unterschiedlichen Steuervorrichtungen gesteuert werden.

Eine vorteilhafte Ausführungsform ist dadurch gegeben, dass die Vorrichtung eine Spike-Setz-Vorrichtung zum Setzen eines Spikes, insbesondere eines Gummispikes, in das Spike-Loch aufweist.

Hierdurch ist auf einfache Art und Weise das Setzen des Spikes in das das insbesondere zur Verklebung von Gummi auf Gummi geeignete flüssige Klebemittel aufweisende Spike-Loch ermöglicht.

Die Spike-Setz-Vorrichtung kann dabei baulich in die Vorrichtung integriert sein oder baulich getrennt von der Vorrichtung ausgebildet sein. Die Vorrichtung kann eine Steuervorrichtung zur Steuerung der Spike-Setz-Vorrichtung aufweisen.

In Bezug auf das Verfahren wird die Aufgabe gelöst durch ein Verfahren zur Befestigung eines Gummispikes in einem Spike-Loch eines Laufstreifens eines Fahrzeugreifens unter Verwendung eines zur Verklebung von Gummi auf Gummi geeigneten flüssigen Klebemittels und einer Vorrichtung zum Einbringen des flüssigen Klebemittels in das Spike-Loch, wobei das Verfahren zumindest die folgenden Schritte in der dargelegten Reihenfolge aufweist:
a) Positionieren eines Auslasses einer Injektionsleitung der Vorrichtung mittels einer Positioniervorrichtung der Vorrichtung über dem Spike-Loch des Laufstreifens,
b) Absenken des über dem Spike-Loch positionierten Auslasses mittels der Positioniervorrichtung in das Spike-Loch,
c) Pumpen des flüssigen Klebemittels von einem das flüssige Klebemittel enthaltenden Vorlagenbehälter der Vorrichtung in die Injektionsleitung mittels einer Pumpe der Vorrichtung, bis eine definierte Menge des flüssigen Klebemittels in das Spike-Loch eingebracht ist,
d) Anheben des Auslasses aus dem Spike-Loch heraus und Positionieren des Auslasses über dem Spike-Loch mittels der Positioniervorrichtung, sowie Entfernen des über dem Spike-Loch positionierten Auslasses vom Spike-Loch mittels der Positioniervorrichtung,
e) setzen des Gummispikes aufweisend einen Spike-Körper, dessen äußere Oberfläche ganz oder teilweise aus Gummi ausgebildet ist, in das das flüssige Klebemittel aufweisende Spike-Loch mittels einer Spike-Setz-Vorrichtung,
f) Aushärten, insbesondere Vernetzen, des flüssigen Klebemittels zur Schaffung einer Klebeverbindung zwischen dem Gummi des Gummispikes und einem das Spike-Loch begrenzenden Gummimaterial des Laufstreifens.

Das Verfahren ermöglicht somit auf einfache Art und Weise die Verwendung eines zur Verklebung von Gummi auf Gummi geeigneten flüssigen Klebemittels zur verbesserten Anbindung zwischen dem Gummi des Gummispikes und dem das Spike-Loch begrenzenden Gummimaterials des Laufstreifens. Erfindungswesentlich für eine gute Anbindung und Befestigung des Gummispikes im Laufstreifen ist, dass mittels des Verfahrens eine definierte Menge des zur Verklebung von Gummi auf Gummi geeigneten flüssigen Klebemittels in das Spike-Loch vor Einsetzen des Spikes in das Spike-Loch eingebracht wird. Hierdurch ist eine kontrollierte Verklebung des Gummispikes im Spikeloch ermöglicht. Ein aufwändiges Aufbringung einer die Haftung beförderlichen Schicht auf den Spike vor Einsetzen des Spikes in das Spike-Loch ist nicht nötig. Die Verwendung des flüssigen Klebemittels hilft zudem bei der Vermeidung von Lufteinschlüssen zwischen Gummispike und Laufstreifen, wodurch die dauerhafte Anbindung verbessert ist. Die Verwendung eines in das Spike-Loch eingebrachten flüssigen Klebemittels erweitert zudem die anwendbaren Klebemittel.

Somit ist ein Verfahren zur Verfügung gestellt, das auf einfache Art und Weise eine verbesserte Befestigung des Gummispikes im Spike-Loch des Laufstreifens ermöglicht. Die Anbindung des Gummispikes im Laufstreifen ist verbessert.

Der Gummispike kann mit einem zumindest aus einem Fußflansch und einem Oberflansch bestehenden Spikekörper und einem von dem Oberflansch zumindest teilweise ummantelten Spikepin, der sich von einem im Fußflansch verankerten Ende bis zu einem Spikepinende des Spikepins erstreckt, ausgebildet sein. Der Oberflansch kann ganz oder teilweise aus Gummi gebildet sein. Der Fußflansch kann ganz oder teilweise aus Gummi ausgebildet sein.

Der Gummispike weist einen Spike-Körper auf, dessen äußere Oberfläche ganz oder teilweise aus Gummi ausgebildet ist.

Der Spike-Körper kann zumindest einen Fußflansch und einen Oberflansch aufweisen oder daraus bestehen, wobei der Oberflansch zumindest teilweise einen Spikepin ummantelt, welcher sich von einem im Fußflansch verankerten Ende bis zu einem Spikepinende des Spikepins erstreckt. Der Oberflansch kann ganz oder teilweise aus Gummi gebildet sein. Alternativ oder zusätzlich kann der Fußflansch ganz oder teilweise aus Gummi ausgebildet sein.

Die Positioniervorrichtung kann zur jeweiligen Positionierung des Auslasses der Injektionsleitung relativ zum Spike-Loch die absolute Position des Auslasses und/oder die absolute Position des Spike-Lochs verändern. Die Positioniervorrichtung kann hierfür wirkweise mit der Vorrichtung und/oder dem Reifen verbunden sein.

Eine vorteilhafte Ausführungsform des Verfahrens ist dadurch gegeben, dass die Vorrichtung gemäß der vorbeschriebenen Vorrichtung und/oder deren vorbeschriebenen Ausführungsformen ausgeführt ist.

Die Vorrichtung ist besonders zur einfachen und effizienten Ausführung des Verfahrens geeignet.

Das Verfahren kann eine Steuerung der Pumpe mittels einer Steuervorrichtung und/oder eine Steuerung der Positioniervorrichtung mittels einer Steuervorrichtung und/oder eine Steuerung der Spike-Setz-Vorrichtung mittels einer Steuervorrichtung aufweisen.

Die Vorrichtung kann eine Steuervorrichtung zur Steuerung der Pumpe und/oder eine Steuervorrichtung zur Steuerung der Positioniervorrichtung und/oder eine Steuervorrichtung aufweist. Die Pumpe und/oder die Positioniervorrichtung und/oder die Spike-Setz-Vorrichtung können von derselben Steuervorrichtung oder von unterschiedlichen Steuervorrichtungen gesteuert werden. Die jeweilige Steuervorrichtung kann dabei wirkweise mit der zu steuernden Komponente verbunden sein.

Eine vorteilhafte Ausführungsform ist dadurch gegeben, dass das flüssige Klebemittel unvernetztes elastomeres Material aufweist. Es kann sich insbesondere um unvulkanisiertes elastomeres Material handeln. Das Aushärten des flüssigen Klebemittels in Schritt f) entspricht dann ganz oder teilweise dem Vernetzen des elastomeren Materials, insbesondere Mittels externer Wärmeeinwirkung.

Das vernetzte elastomere Material weist gummiartige Eigenschaften auf und ist dann elastisch und flexibel, wodurch eine besonders vorteilhafte Anbindung des Gummispikes erfolgt.

Eine vorteilhafte Ausführungsform ist dadurch gegeben, dass das flüssige Klebemittel ein Lösungsmittel und ein in dem Lösungsmittel gelöstes unvernetztes elastomeres Material aufweist oder daraus gebildet ist. Das Aushärten des flüssigen Klebemittels in Schritt f) entspricht dann ganz oder teilweise dem Vernetzen des elastomeren Materials, insbesondere Mittels externer Wärmeeinwirkung.

Das vernetzte elastomere Material weist gummiartige Eigenschaften auf und ist dann elastisch und flexibel, wodurch eine besonders vorteilhafte Anbindung des Gummispikes erfolgt.

Ein derartiges flüssiges Klebemittel ist besonders gut zur Verklebung von Gummi auf Gummi geeignet. Somit ist auf einfache Art und Weise ein Verfahren zur Verfügung gestellt, das eine verbesserte Anbindung zwischen einem Gummispike und dem Laufstreifen ermöglichen Das Lösungsmittel kann ein Benzin und/oder ein Öl aufweisen. Das Lösungsmittel kann aus einem Benzin und/oder einem Öl bestehen. Das Lösungsmittel kann ein Öl sein.

Eine vorteilhafte Ausführungsform ist dadurch gegeben, dass in Schritt f) das Aushärten, insbesondere Vernetzen, des flüssigen Klebemittels mittels externer Wärmeeinwirkung, insbesondere in einem Autoklaven, erfolgt.

Hierdurch ist eine besonders beständige Klebeverbindung ermöglicht. Die externe Wärmewirkung kann in einem Autoklaven erfolgen.

Eine vorteilhafte Ausführungsform ist dadurch gegeben, dass die Schritte a) bis d) für mehrere oder für alle Spike-Löcher des Laufstreifens durchgeführt werden, bevor für diese in den Schritten a) bis d) mit dem flüssigen Klebemittel befüllten mehreren oder alle Spike-Löcher Schritt e) erfolgt.

Es wird somit zuerst in mehrere oder alle Spike-Löcher das flüssige Klebemittel gefüllt, bevor die Gummispikes in diese Spike-Löcher gesetzt werden. Hierdurch ist ein besonders effizientes Verfahren zur Bespikung eines Reifens mit mehreren Gummispikes ermöglicht.

Eine vorteilhafte Ausführungsform ist dadurch gegeben, dass die Schritte a) bis d) für ein Spike-Loch ganz oder teilweise parallel zu Schritt e) für ein bereits mittels der Schritte a) bis d) mit dem flüssigen Klebemittel befülltes anderes Spike-Loch erfolgen.

Hierdurch ist ein besonders effizientes Verfahren zur Bespikung eines Reifens mit mehreren Gummispikes ermöglicht.

Das Verfahren ist sowohl für die Bespikung von Fahrzeugluftreifen als auch für die Bespikung von Vollgummireifen vorteilhaft.

Alle in dieser Beschreibung wiedergegebenen Ausführungsformen der erfindungsgemäßen Vorrichtungen und Verfahren stellen lediglich Beispiele der Ausgestaltung der Erfindung dar. Entsprechend sind auch durch einzelne oder mehrere Merkmale einer Ausführungsform allein oder die Kombination der Merkmale verschiedene Ausführungsformen weitere Ausführungsformen der Erfindung gegeben, die Gegenstand der Erfindung sind, soweit diese nicht explizit anders in der Beschreibung erläutert wird.

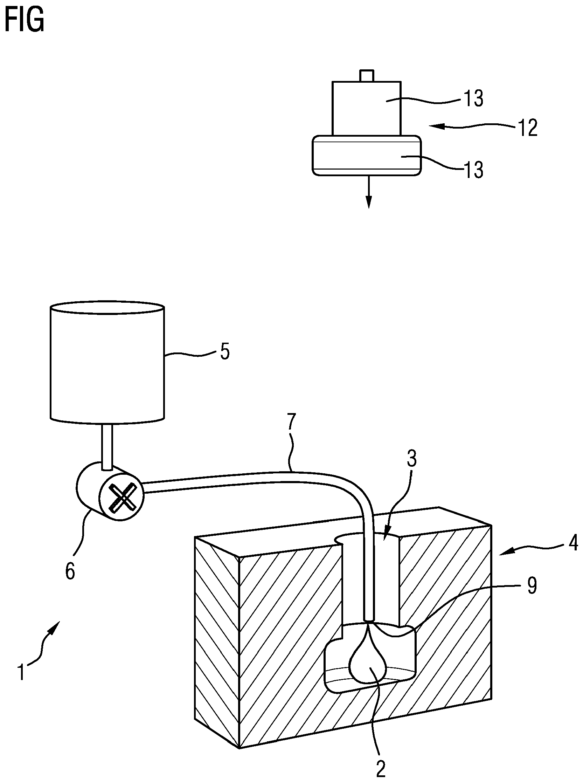

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 eine erfindungsgemäße Vorrichtung sowie einen Laufstreifen aufweisend ein Spike-Loch sowie einen Gummispike.

Die Fig. 1 zeigt eine Vorrichtung 1 zum Einbringen eines flüssigen Klebemittels 2 in ein Spike-Loch 3 eines Laufstreifens 4 eines Fahrzeugreifens, wobei die Vorrichtung aufweist einen Vorlagenbehälter 5 zur Aufnahme des flüssigen Klebemittels 2, eine Pumpe 6 zum Pumpen des flüssigen Klebemittels 2 von dem Vorlagenbehälter 5 in eine Injektionsleitung 7 der Vorrichtung 1, eine Positioniervorrichtung 14 zur Positionierung eines Auslasses 9 der Injektionsleitung 7 relativ zu dem Spike-Loch 3 des Laufstreifens 4, zumindest zum Positionieren des Auslasses 9 der Injektionsleitung 7 über dem Spike-Loch 3, zum Absenken des über dem Spike-Loch 3 positionierten Auslasses 9 in das Spike-Loch, zum Anheben des Auslasses 9 aus dem Spike-Loch heraus und Positionieren des Auslasses 9 über dem Spike-Loch 3 und zum Entfernen des über dem Spike-Loch 3 positionierten Auslasses 9 vom Spike-Loch 3.

Die Positioniervorrichtung 14 kann zur jeweiligen Positionierung des Auslasses 9 der Injektionsleitung relativ zum Spike-Loch 3 die absolute Position des Auslasses 9 und/oder die absolute Position des Spike-Lochs 3 verändern. Die Positioniervorrichtung 14 kann wirkweise mit der Vorrichtung 1 und/oder dem Reifen verbunden sein.

Die Vorrichtung 1 kann wie dargestellt eine Steuervorrichtung 11 zur Steuerung der Pumpe 6 und/oder eine Steuervorrichtung 11 zur Steuerung der Positioniervorrichtung 14 aufweisen. Die Steuervorrichtung 11 kann hierfür wirkweise mit der Pumpe 6 und/oder der Positioniervorrichtung 14 verbunden sein. Die Pumpe 6 und die Positioniervorrichtung 14 können von derselben Steuervorrichtung 11 oder von unterschiedlichen Steuervorrichtungen gesteuert werden.

Die Vorrichtung 1 kann eine Spike-Setz-Vorrichtung (nicht dargestellt) zum Setzen eines Spikes 12, insbesondere eines Gummispikes 12, in das Spike-Loch 3 aufweisen. Die Spike-Setz-Vorrichtung ist derart ausgeführt, dass sie zur Setzung des Spikes 12 in Richtung des dargestellten Pfeils in das Spike-Loch 3 geeignet ist. Die Spike-Setz-Vorrichtung kann baulich in die Vorrichtung integriert sein oder baulich getrennt von der Vorrichtung ausgebildet sein. Die Vorrichtung kann eine Steuervorrichtung 11 zur Steuerung der Spike-Setz-Vorrichtung aufweisen.

In der Fig. 1 ist ein Schritt in einem Verfahren zur Befestigung eines Gummispikes 12 in einem Spike-Loch 3 eines Laufstreifens 4 eines Fahrzeugreifens unter Verwendung eines zur Verklebung von Gummi auf Gummi geeigneten flüssigen Klebemittels 2 und der Vorrichtung 1 zum Einbringen des flüssigen Klebemittels 2 in das Spike-Loch 3.

Das Verfahren umfasst zumindest die folgenden Schritte in der dargelegten Reihenfolge:
a) Positionieren des Auslasses 9 des Injektionsleitung 7 der Vorrichtung 1 mittels der Positioniervorrichtung 14 der Vorrichtung 1 über dem Spike-Loch 3 des Laufstreifens 4,
b) Absenken des über dem Spike-Loch positionierten Auslasses 9 mittels der Positioniervorrichtung 14 in das Spike-Loch 3,
c) Pumpen des flüssigen Klebemittels 2 von dem das flüssige Klebemittel enthaltenden Vorlagenbehälter 5 der Vorrichtung 1 in die Injektionsleitung 7 mittels der Pumpe 6 der Vorrichtung 1, bis eine definierte Menge des flüssigen Klebemittels 2 in das Spike-Loch 3 eingebracht ist,
d) Anheben des Auslasses 9 aus dem Spike-Loch 3 heraus und Positionieren des Auslasses 9 über dem Spike-Loch 3 mittels der Positioniervorrichtung 14, sowie Entfernen des über dem Spike-Loch 3 positionierten Auslasses vom Spike-Loch 3 mittels der Positioniervorrichtung 14,
e) setzen des Gummispikes 12 aufweisend einen Spike-Körper, dessen äußere Oberfläche ganz oder teilweise aus Gummi 13 ausgebildet ist, in das das flüssige Klebemittel 2 aufweisende Spike-Loch 3 mittels einer Spike-Setz-Vorrichtung,
f) Aushärten, insbesondere Vernetzen, des flüssigen Klebemittels 2 zur Schaffung einer Klebeverbindung zwischen dem Gummi des Gummispikes und einem das Spike-Loch 3 begrenzenden Gummimaterial des Laufstreifens.

Dargestellt ist in der Fig. 1 die Situation zwischen Schritt c) und d). Der Auslass 9 ist in das Spike-Loch 3 abgesenkt und eine definierte Menge des flüssigen Klebemittels 2 ist in das Spike-Loch 3 eingebracht.

Die Spike-Setz-Vorrichtung aus Schritt e) ist nicht dargestellt. Der Gummispike12 wird von der Spike-Setz-Vorrichtung in Richtung des dargestellten Pfeils in das Spike-Loch 3 gesetzt. Der Gummispike 1 ist mit einem zumindest aus einem Fußflansch und einem Oberflansch bestehenden Spikekörper und einem von dem Oberflansch zumindest teilweise ummantelten Spikepin, der sich von einem im Fußflansch verankerten Ende bis zu einem Spikepinende des Spikepins erstreckt, ausgebildet. Der Oberflansch kann wie dargestellt ganz oder teilweise aus Gummi 13 gebildet sein. Der Fußflansch kann wie dargestellt ganz oder teilweise aus Gummi 13 ausgebildet sein.

Das flüssige Klebemittel 2 kann ein unvernetztes, insbesondere ein unvulkanisiertes, elastomeres Material aufweisen. Das flüssige Klebemittel 2 kann dabei ein Lösungsmittel, insbesondere ein Öl, und ein in dem Lösungsmittel gelöstes unvernetztes elastomeres Material aufweisen oder daraus gebildet sein. Das Lösungsmittel kann ein Benzin und/oder ein Öl aufweisen. Das Lösungsmittel kann aus einem Benzin und/oder einem Öl bestehen. Das Aushärten des das unvernetzte elastomere Material aufweisenden flüssigen Klebemittels 2 erfolgt ganz oder teilweise durch Vernetzen des elastomeren Materials.

In Schritt f) kann das Aushärten, insbesondere Vernetzen, des flüssigen Klebemittels mittels externer Wärmeeinwirkung, insbesondere in einem Autoklaven, erfolgen.

Die Schritte a) bis d) können für mehrere oder für alle Spike-Löcher 3 des Laufstreifens 4 durchgeführt werden, bevor für diese in den Schritten a) bis d) mit dem flüssigen Klebemittel 2 befüllten mehreren oder alle Spike-Löcher 3 Schritt e) erfolgt.

Die Schritte a) bis d) können für ein Spike-Loch ganz oder teilweise parallel zu Schritt e) für ein bereits mittels der Schritte a) bis d) mit dem flüssigen Klebemittel 2 befülltes anderes Spike-Loch 3 erfolgen.

Der Laufstreifen 4 kann ein Laufstreifen eines Fahrzeugluftreifens oder eines Vollgummireifens sein.

### Bezugszeichenliste

### (Teil der Beschreibung)

- 1: Vorrichtung
- 2: flüssiges Klebemittel
- 3: Spike-Loch
- 4: Laufstreifen
- 5: Vorlagenbehälter
- 6: Pumpe
- 7: Injektionsleitung
- 9: Auslass
- 11: Steuervorrichtung
- 12: Gummispike
- 13: Gummi
- 14: Positioniervorrichtung

## Patentansprüche

1. Vorrichtung (1) zum Einbringen eines flüssigen Klebemittels (2) in ein Spike-Loch (3) eines Laufstreifens (4) eines Fahrzeugreifens, wobei die Vorrichtung aufweist
• einen Vorlagenbehälter (5) zur Aufnahme des flüssigen Klebemittels (2),
• eine Pumpe (6) zum Pumpen des flüssigen Klebemittels (2) von dem Vorlagenbehälter (5) in eine Injektionsleitung (7) der Vorrichtung (1) und
• eine Positioniervorrichtung (14) zur Positionierung eines Auslasses (9) der Injektionsleitung (7) relativ zu dem Spike-Loch (3) des Laufstreifens (4), wobei die Positioniervorrichtung (14) zumindest geeignet ist
o zum Positionieren des Auslasses (9) der Injektionsleitung (7) über dem Spike-Loch (3),
o zum Absenken des über dem Spike-Loch (3) positionierten Auslasses (9) in das Spike-Loch,
∘ zum Anheben des Auslasses (9) aus dem Spike-Loch heraus und Positionieren des Auslasses (9) über dem Spike-Loch (3) und
∘ zum Entfernen des über dem Spike-Loch (3) positionierten Auslasses (9) vom Spike-Loch (3).

2. Vorrichtung (1) gemäß Anspruch 1, **dadurch gekennzeichnet, dass** die Vorrichtung eine Steuervorrichtung (11) zur Steuerung der Pumpe (6) und/oder eine Steuervorrichtung (11) zur Steuerung der Positioniervorrichtung (14) aufweist.

3. Vorrichtung (1) gemäß Anspruch 1 oder 2, **dadurch gekennzeichnet, dass** die Vorrichtung eine Spike-Setz-Vorrichtung (10) zum Setzen eines Spikes (12), insbesondere eines Gummispikes (12), in das Spike-Loch (3) aufweist.

4. Verfahren zur Befestigung eines Gummispikes (12) in einem Spike-Loch (3) eines Laufstreifens (4) eines Fahrzeugreifens unter Verwendung eines zur Verklebung von Gummi auf Gummi geeigneten flüssigen Klebemittels (2) und einer Vorrichtung (1) zum Einbringen des flüssigen Klebemittels (2) in das Spike-Loch (3),
wobei das Verfahren zumindest die folgenden Schritte in der dargelegten Reihenfolge aufweist:
a) Positionieren eines Auslasses (9) einer Injektionsleitung (7) der Vorrichtung (1) mittels einer Positioniervorrichtung (14) der Vorrichtung (1) über dem Spike-Loch (3) des Laufstreifens (4),
b) Absenken des über dem Spike-Loch positionierten Auslasses (9) mittels der Positioniervorrichtung (14) in das Spike-Loch (3),
c) Pumpen des flüssigen Klebemittels (2) von einem das flüssige Klebemittel enthaltenden Vorlagenbehälter (5) der Vorrichtung (1) in die Injektionsleitung (7) mittels einer Pumpe (6) der Vorrichtung (1), bis eine definierte Menge des flüssigen Klebemittels (2) in das Spike-Loch (3) eingebracht ist,
d) Anheben des Auslasses (9) aus dem Spike-Loch (3) heraus und Positionieren des Auslasses (9) über dem Spike-Loch (3) mittels der Positioniervorrichtung (14), sowie Entfernen des über dem Spike-Loch (3) positionierten Auslasses vom Spike-Loch (3) mittels der Positioniervorrichtung (14),
e) setzen des Gummispikes (12) aufweisend einen Spike-Körper, dessen äußere Oberfläche ganz oder teilweise aus Gummi (13) ausgebildet ist, in das das flüssige Klebemittel (2) aufweisende Spike-Loch (3) mittels einer Spike-Setz-Vorrichtung (10),
f) Aushärten, insbesondere Vernetzen, des flüssigen Klebemittels (2) zur Schaffung einer Klebeverbindung zwischen dem Gummi des Gummispikes und einem das Spike-Loch (3) begrenzenden Gummimaterial des Laufstreifens.

5. Verfahren gemäß dem vorhergehenden Anspruch, **dadurch gekennzeichnet, dass** die Vorrichtung (1) gemäß zumindest einem der Ansprüche 1 bis 3 ausgebildet ist.

6. Verfahren gemäß zumindest einem der Ansprüche 4 bis 5, **dadurch gekennzeichnet, dass** das flüssige Klebemittel (2) unvernetztes elastomeres Material aufweist.

7. Verfahren gemäß zumindest einem der Ansprüche 4 bis 6, **dadurch gekennzeichnet, dass** das flüssige Klebemittel (2) ein Lösungsmittel, insbesondere ein Lösungsmittel aufweisend ein Öl oder ein Benzin, und ein in dem Lösungsmittel gelöstes unvernetztes elastomeres Material aufweist oder daraus gebildet ist.

8. Verfahren gemäß zumindest einem der Ansprüche 4 bis 7, **dadurch gekennzeichnet, dass** in Schritt f) das Aushärten, insbesondere vernetzendes flüssigen Klebemittels mittels externer Wärmeeinwirkung, insbesondere in einem Autoklaven, erfolgt.

9. Verfahren gemäß zumindest einem der Ansprüche 4 bis 8, **dadurch gekennzeichnet, dass** die Schritte a) bis d) für mehrere oder für alle Spike-Löcher (3) des Laufstreifens (4) durchgeführt werden, bevor für diese in den Schritten a) bis d) mit dem flüssigen Klebemittel (2) befüllten mehreren oder alle Spike-Löcher (3) Schritt e) erfolgt.

10. Verfahren gemäß zumindest einem der Ansprüche 4 bis 9, **dadurch gekennzeichnet, dass** die Schritte a) bis d) für ein Spike-Loch ganz oder teilweise parallel zu Schritt e) für ein bereits mittels der Schritte a) bis d) mit dem flüssigen Klebemittel (2) befülltes anderes Spike-Loch (3) erfolgen.

11. Verfahren gemäß zumindest einem der Ansprüche 4 bis 10, **dadurch gekennzeichnet, dass** der Fahrzeugreifen ein Fahrzeugluftreifen oder ein Vollgummireifen ist.

## Claims

1. Device (1) for introducing a liquid adhesive (2) into a spike hole (3) in a tread (4) of a vehicle tyre, the device comprising
• a reservoir vessel (5) for receiving the liquid adhesive (2),
• a pump (6) for pumping the liquid adhesive (2) from the reservoir vessel (5) into an injection line (7) of the device (1) and
• a positioning device (14) for positioning an outlet (9) of the injection line (7) relative to the spike hole (3) in the tread (4), the positioning device (14) at least being suitable
∘ for positioning the outlet (9) of the injection line (7) above the spike hole (3),
∘ for lowering the outlet (9) positioned above the spike hole (3) into the spike hole,
∘ for lifting the outlet (9) out of the spike hole and positioning the outlet (9) above the spike hole (3) and
∘ for removing the outlet (9) positioned above the spike hole (3) from the spike hole (3).

2. Device (1) according to Claim 1, **characterized in that** the device comprises a control device (11) for controlling the pump (6) and/or a control device (11) for controlling the positioning device (14).

3. Device (1) according to Claim 1 or 2, **characterized in that** the device comprises a spike setting device (10) for setting a spike (12), in particular a rubber spike (12), into the spike hole (3).

4. Method for fastening a rubber spike (12) in a spike hole (3) in a tread (4) of a vehicle tyre
using a liquid adhesive (2) suitable for adhesively bonding rubber to rubber and a device (1) for introducing the liquid adhesive (2) into the spike hole (3),
the method comprising at least the following steps in the stated sequence:
a) positioning an outlet (9) of an injection line (7) of the device (1) above the spike hole (3) in the tread (4) by means of a positioning device (14) of the device (1),
b) lowering the outlet (9) positioned above the spike hole into the spike hole (3) by means of the positioning device (14),
c) pumping the liquid adhesive (2) from a reservoir vessel (5), containing the liquid adhesive, of the device (1) into the injection line (7) by means of a pump (6) of the device (1), until a defined amount of the liquid adhesive (2) has been introduced into the spike hole (3),
d) lifting the outlet (9) out of the spike hole (3) and positioning the outlet (9) above the spike hole (3) by means of the positioning device (14), and removing the outlet positioned above the spike hole (3) from the spike hole (3) by means of the positioning device (14),
e) setting the rubber spike (12) comprising a spike body, the outer surface of which is entirely or partially made from rubber (13), into the spike hole (3) containing the liquid adhesive (2) by means of a spike setting device (10),
f) curing, in particular crosslinking, the liquid adhesive (2) to provide an adhesive bond between the rubber of the rubber spike and a rubber material of the tread delimiting the spike hole (3).

5. Method according to the preceding claim, **characterized in that** the device (1) is designed according to at least one of Claims 1 to 3.

6. Method according to at least either of Claims 4 and 5, **characterized in that** the liquid adhesive (2) comprises uncrosslinked elastomer material.

7. Method according to at least one of Claims 4 to 6, **characterized in that** the liquid adhesive (2) comprises or is made from a solvent, in particular a solvent comprising an oil or a benzine, and an uncrosslinked elastomer material dissolved in the solvent.

8. Method according to at least one of Claims 4 to 7, **characterized in that**, in step f), the curing, in particular of crosslinking liquid adhesive, is effected by means of an external action of heat, in particular in an autoclave.

9. Method according to at least one of Claims 4 to 8, **characterized in that** steps a) to d) are carried out for multiple or for all spike holes (3) in the tread (4), before step e) is effected for these multiple or all spike holes (3) filled with the liquid adhesive (2) in steps a) to d).

10. Method according to at least one of Claims 4 to 9, **characterized in that** steps a) to d) are effected for a spike hole completely or partially in parallel with step e) for another spike hole (3) already filled with the liquid adhesive (2) using steps a) to d).

11. Method according to at least one of Claims 4 to 10, **characterized in that** the vehicle tyre is a pneumatic vehicle tyre or a solid rubber tyre.

## Revendications

1. Dispositif (1) pour introduire un agent adhésif liquide (2) dans un trou à crampon (3) d'une bande de roulement (4) d'un pneumatique de véhicule, le dispositif comprenant
• un réservoir d'alimentation (5) destiné à recevoir l'agent adhésif liquide (2),
• une pompe (6) pour pomper l'agent adhésif liquide (2) du récipient d'alimentation (5) dans une conduite d'injection (7) du dispositif (1), et
• un dispositif de positionnement (14) pour positionner une sortie (9) de la conduite d'injection (7) par rapport au trou à crampon (3) de la bande de roulement (4), le dispositif de positionnement (14) étant au moins adapté
o pour positionner au-dessus du trou à crampon (3) la sortie (9) de la conduite d'injection (7),
o pour abaisser dans le trou à crampon la sortie (9) positionnée au-dessus du trou à crampon (3),
o pour soulever la sortie (9) hors du trou à crampon et pour positionner la sortie (9) au-dessus du trou à crampon (3), et
o pour retirer du trou à crampon (3) la sortie (9) positionnée au-dessus du trou à crampon (3).

2. Dispositif (1) selon la revendication 1, **caractérisé en ce que** le dispositif comprend un dispositif de commande (11) pour commander la pompe (6) et/ou un dispositif de commande (11) pour commander le dispositif de positionnement (14).

3. Dispositif (1) selon la revendication 1 ou la revendication 2, **caractérisé en ce que** le dispositif comprend un dispositif (10) de pose de crampons pour poser un crampon (12), notamment un crampon en caoutchouc (12), dans le trou à crampon (3).

4. Procédé de fixation d'un crampon en caoutchouc (12) dans un trou à crampon (3) d'une bande de roulement (4) d'un pneumatique de véhicule, en utilisant un agent adhésif liquide (2) approprié pour le collage de caoutchouc sur caoutchouc et un dispositif (1) pour introduire l'agent adhésif liquide (2) dans le trou à crampon (3),
le procédé comprenant au moins les étapes suivantes dans l'ordre indiqué :
a) positionnement d'une sortie (9) d'une conduite d'injection (7) du dispositif (1) au moyen d'un dispositif de positionnement (14) du dispositif (1) au-dessus du trou à crampon (3) de la bande de roulement (4),
b) abaissement dans le trou à crampon (3), au moyen du dispositif de positionnement (14), de la sortie (9) positionnée au-dessus du trou à crampon,
c) pompage dans la conduite d'injection (7), au moyen d'une pompe (6) du dispositif (1), de l'agent adhésif liquide (2), depuis un réservoir d'alimentation (5) du dispositif (1) contenant l'agent adhésif liquide, jusqu'à ce qu'une quantité définie d'agent adhésif liquide (2) soit introduite dans le trou à crampon (3),
d) soulèvement de la sortie (9) hors du trou à crampon (3) et positionnement de la sortie (9) au-dessus du trou à crampon (3) au moyen du dispositif de positionnement (14), ainsi qu'enlèvement par rapport au trou à crampon (3) de la sortie positionnée au-dessus du trou à crampon (3) au moyen du dispositif de positionnement (14),
e) mise en place du crampon en caoutchouc (12), présentant un corps de crampon dont la surface extérieure est formée entièrement ou partiellement de caoutchouc (13), dans le trou à crampon (3) présentant l'agent adhésif liquide (2),
au moyen d'un dispositif (10) de mise en place de crampons,
f) durcissement, en particulier réticulation, de l'agent adhésif liquide (2) pour créer une liaison adhésive entre le caoutchouc du crampon en caoutchouc et un matériau en caoutchouc de la bande de roulement délimitant le trou à crampon (3).

5. Procédé selon la revendication précédente, **caractérisé en ce que** le dispositif (1) est configuré selon au moins l'une des revendications 1 à 3.

6. Procédé selon au moins l'une des revendications 4 à 5, **caractérisé en ce que** l'agent adhésif liquide (2) comprend un matériau élastomère non réticulé.

7. Procédé selon au moins l'une des revendications 4 à 6, **caractérisé en ce que** l'agent adhésif liquide (2) présente un agent solvant, en particulier un agent solvant comprenant une huile ou une essence, et un matériau élastomère non réticulé dissous dans l'agent solvant ou qui est formé à partir de celui-ci.

8. Procédé selon au moins l'une des revendications 4 à 7, **caractérisé en ce qu'**à l'étape f), le durcissement, en particulier la réticulation de l'agent adhésif liquide, est effectué par un effet thermique externe, en particulier dans un autoclave.

9. Procédé selon au moins l'une des revendications 4 à 8, **caractérisé en ce que** les étapes a) à d) sont mises en oeuvre pour plusieurs ou pour tous les trous à crampon (3) de la bande de roulement (4), avant que l'étape e) soit mise en oeuvre pour ces plusieurs trous ou pour tous les trous à crampon (3) remplis de l'agent adhésif liquide (2) lors des étapes a) à d).

10. Procédé selon au moins l'une des revendications 4 à 9, **caractérisé en ce que** les étapes a) à d) pour un trou à crampon s'effectuent entièrement ou partiellement parallèlement à l'étape e) pour un autre trou à crampon (3) déjà rempli de l'agent adhésif liquide (2) lors des étapes a) à d).

11. Procédé selon au moins l'une des revendications 4 à 10, **caractérisé en ce que** le pneumatique du véhicule est un pneumatique de véhicule ou un pneumatique plein.
